(19) Europäisches Patentamt
European Patent Office
Office européen des brevets

(11) EP 0 794 957 B1

(12) **EUROPÄISCHE PATENTSCHRIFT**

(45) Veröffentlichungstag und Bekanntmachung des Hinweises auf die Patenterteilung:
**21.04.1999 Patentblatt 1999/16**

(21) Anmeldenummer: **95941034.1**

(22) Anmeldetag: **28.11.1995**

(51) Int Cl.[6]: **C07F 17/02**
// C07M7:00

(86) Internationale Anmeldenummer:
**PCT/EP95/04678**

(87) Internationale Veröffentlichungsnummer:
**WO 96/16971 (06.06.1996 Gazette 1996/26)**

(54) **VERFAHREN ZUR HERSTELLUNG OPTISCH AKTIVER METALLOCENYLPHOSPHINE**

METHOD OF PRODUCING OPTICALLY ACTIVE METALLOCENYL PHOSPHINES

PROCEDE DE PRODUCTION DE PHOSPHINES DE METALLOCENYLE OPTIQUEMENT ACTIVES

(84) Benannte Vertragsstaaten:
**AT BE CH DE DK ES FR GB GR IE IT LI LU MC NL PT SE**

(30) Priorität: **29.11.1994 CH 3598/94**

(43) Veröffentlichungstag der Anmeldung:
**17.09.1997 Patentblatt 1997/38**

(73) Patentinhaber: **LONZA AG**
**CH-3945 Gampel/Wallis (CH)**

(72) Erfinder: **BRIEDEN, Walter**
**CH-3902 Glis (CH)**

(74) Vertreter: **Weinhold, Peter, Dr. et al**
**Winter, Brandl, Fürniss, Hübner, Röss, Kaiser, Polte, Kindermann Partnerschaft**
**Patent- und Rechtsanwaltskanzlei**
**Alois-Steinecker-Strasse 22**
**85354 Freising (DE)**

(56) Entgegenhaltungen:
- **TETRAHEDRON: ASYMMETRY (TASYE3,09574166);93; VOL.4 (5); PP.919-24, CNR;IST. STUD. SOSTANZE NAT. INTERESSE ALIMENT. CHIM. FARM.; VALVERDE; 95028; ITALY (IT), LAMBUSTA D ET AL 'Separation of stereoisomeric 1,1'-bis(.alpha.-hydroxyethyl)ferroce nes by lipase-mediated acetylation in organic solvent'**
- **BULL. CHEM. SOC. JPN. (BCSJA8,00092673);80; VOL.53 (4); PP.1138-51, KYOTO UNIV.;FAC. ENG.; KYOTO; 606; JAPAN, HAYASHI T ET AL 'Asymmetric synthesis catalyzed by chiral ferrocenylphosphine-trans ition metal complexes. I. Preparation of chiral ferrocenylphosphines' in der Anmeldung erwähnt**
- **JOURNAL OF THE AMERICAN CHEMICAL SOCIETY, Bd. 92, Nr. 18, 9.September 1970 DC US, Seiten 5389-5393, MARQUARDING D. 'Correlation of central and planar chirality in ferrocene derivatives' in der Anmeldung erwähnt**
- **J. ORGANOMET. CHEM. (JORCAI,0022328X);89; VOL.370 (1-3); PP.129-39, KYOTO UNIV.;FAC. ENG.; KYOTO; 606; JAPAN (JP), XP 000033876 HAYASHI T ET AL 'Asymmetric synthesis catalyzed by chiral ferocenylphosphine-transi tion metal complexes. VII. New chiral ferrocenylphosphines with C2 symmetry'**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 794 957 B1

## Beschreibung

Die vorliegende Erfindung betrifft ein Verfahren zur Herstellung optisch aktiver Metallocenylphosphine aus prochiralen Acylmetallocenen.

Optisch aktive Phosphine werden in zunehmenden Masse als Liganden für chirale Übergangsmetallkomplexe eingesetzt. Letztere werden ihrerseits als Katalysatoren in homogen katalysierten enantioselektiven Reaktionen ("asymmetrischen Synthesen") verwendet.

Als optisch aktive Phosphine werden insbesondere auch Metallocenylphosphine mit chiralen Substituenten am Cyclopentadienring eingesetzt. Eine wichtige Gruppe solcher Metallocenylphosphine wird durch die allgemeinen Formeln

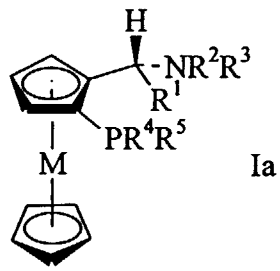
Ia

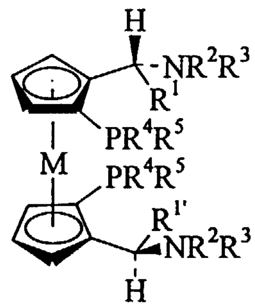
Ib

und deren Spiegelbilder repräsentiert.

Hierbei bedeutet M Eisen, Ruthenium oder Nickel. $R^1$ und $R^{1'}$ sind gleich oder verschieden und jeweils eine $C_1$-$C_4$-Alkylgruppe, eine $C_1$-$C_4$-Perfluoralkylgruppe, eine $C_2$-$C_4$-Alkenylgruppe, eine $C_3$-$C_6$-Cycloalkylgruppe oder eine gegebenenfalls substituierte Arylgruppe. $R^2$ und $R^3$ sind entweder unabhängig voneinander jeweils Wasserstoff oder eine $C_1$-$C_4$-Alkylgruppe oder sie bilden zusammen mit dem Stickstoffatom einen fünf- oder sechsgliedrigen gesättigten heterocyclischen Ring, der gegebenenfalls noch weitere Heteroatome enthalten kann. $R^4$ und $R^5$ sind jeweils unabhängig voneinander eine $C_1$-$C_4$-Alkylgruppe, eine $C_3$-$C_6$-Cycloalkylgruppe oder eine gegebenenfalls mit einer oder mehreren Methyl- oder Methoxygruppen oder mit einem oder mehreren Fluoratomen substituierte Arylgruppe oder $R^4$ und $R^5$ bilden zusammen mit dem Phosphoratom einen gesättigten 5-oder 6-gliedrigen heterocyclischen Ring. Unter $C_1$-$C_4$-Alkylgruppen sind hier und im folgenden jeweils unverzweigte und verzweigte primäre, sekundäre und tertiäre Alkylgruppen mit bis zu vier Kohlenstoffatomen zu verstehen, also Methyl, Ethyl, Propyl, Isopropyl, Butyl, Isobutyl, sec-Butyl und tert-Butyl. Unter $C_1$-$C_4$-Perfluoralkylgruppen sind die entsprechenden perfluorierten Gruppen zu verstehen, vorzugsweise Trifluormethyl. Unter $C_2$-$C_4$-Alkenylgruppen sind beispielsweise Vinyl, Allyl, Propenyl, 1-Butenyl, 2-Butenyl, 3-Butenyl und Isopropenyl zu verstehen, unter $C_3$-$C_6$-Cycloalkyl Cyclopropyl, Cyclobutyl,Cyclopentyl und vorzugsweise Cyclohexyl. Unter Arylgruppen sind mono- und polycyclische aromatische Kohlenwasserstoffreste zu verstehen, insbesondere Phenyl und Naphthyl. Beispiele für solche Metallocenylphosphine und deren Verwendung finden sich u.a. bei T. Hayashi et al., *Bull. Chem. Soc. Jpn.* **1980**, *53*, 1138-1151 (M = Fe).

Die Verbindungen der Formel Ia und Ib enthalten jeweils neben dem Chiralitätszentrum an dem zu $R^1$ benachbarten Kohlenstoffatom noch eine Chiralitätsebene durch den 1,2-disubstituierten Cyclopentadienring. Von den möglichen Stereoisomeren werden jedoch bei der Einführung der Phosphinogrupppe nur diejenigen gebildet, in denen beiden Chiralitätselementen entgegengesetzte Konfiguration zukommt, also die (*R*,S**)-Stereoisomeren nach der in *Chemical Abstracts* benutzten Konvention. Hier und im folgenden ist jeweils das *S*-(*R*,S**)-Stereoisomer gezeichnet, in welchem die absolute Konfiguration bezüglich der Chiralitätsebene S ist.
Falls die beiden Substituenten $R^4$ und $R^5$ am Phosphoratom verschieden sind, bildet letzteres ein zusätzliches Chiralitätszentrum.
Die bisherigen Verfahren zur Herstellung der optisch aktiven Metallocenylphosphine der Formel I (s. z. B. T. Hayashi et al., loc. cit.) erfordern in der Regel eine Racematspaltung einer Vorstufe (vgl. D. Marquarding et al., *J. Am. Chem. Soc.* **1970**, *92*, 5389).

Diese Racematspaltung erfordert nicht nur einen erheblichen Aufwand, sondern verringert auch die Ausbeute, weil in der Regel nur eines der beiden Enantiomeren benötigt wird und das andere als Abfall anzusehen ist.

Aufgabe der vorliegenden Erfindung war es, einen Weg zu den optisch aktiven Metallocenylphosphinen der Formel Ia/Ib zu eröffnen, der ohne Racematspaltung auskommt und es ermöglicht, je nach Bedarf gezielt das abgebildete *S*-(*R*,S**)-Stereoisomer oder dessen Spiegelbild herzustellen.

Erfindungsgemäss wird diese Aufgabe durch das Verfahren nach Anspruch 1 und das Verfahren nach Anspruch 9 gelöst.

Es wurde gefunden, dass sich Acylmetallocene der allgemeinen Formeln

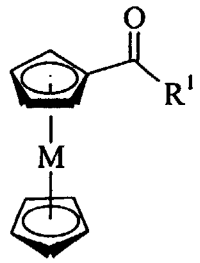
IIa
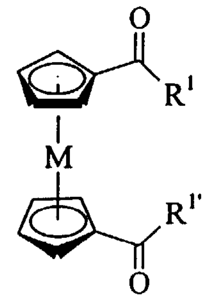
IIb

worin M Eisen, Ruthenium oder Nickel ist und $R^1$ und $R^{1'}$ unabhängig voneinander jeweils eine $C_1$-$C_4$-Alkylgruppe, eine $C_1$-$C_4$-Perfluoraüylgruppe, eine $C_2$-$C_4$-Alkenylgruppe, eine $C_3$-$C_6$-Cycloalkylgrqppe oder eine gegebenenfalls substituierte Arylgruppe sind, mit Boran oder einem anderen Hydroborierungsmittel in Gegenwart eines optisch aktiven Oxazaborolidins der Formel

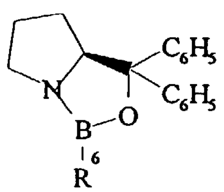
III

worin $R^6$ Wasserstoff, $C_1$-$C_4$-Alkyl oder Phenyl ist,
in guter optischer Ausbeute enantioselektiv zu den entsprechenden Metallocenylalkanolen der allgemeinen Formeln

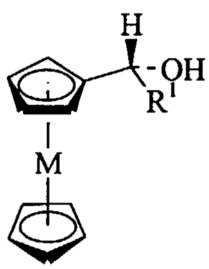
IVa
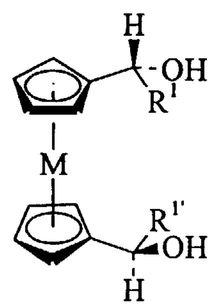
IVb

worin M, $R^1$ und $R^{1'}$ die oben genannten Bedeutungen haben, reduzieren lassen. Hierzu werden für 1 mol Monoacylmetallocen 0,5 mol Boran benötigt, entsprechend für 1 mol Diacylmetallocen 1 mol Boran bzw. eine äquivalente Menge Hydroborierungsmittel. Ein grösserer Überschuss an Boran ist zu vermeiden, weil überraschend gefunden wurde, dass mit überschüssigem Boran eine weitere Reduktion zu Alkylmetallocenen stattfindet.

Die Acylmetallocene der Formeln IIa/IIb können nach oder analog zu bekannten Verfahren hergestellt werden, so beispielsweise das Acetylferrocen nach einer Vorschrift von C. R. Hauser u. J. K. Lindsay, *J. Org. Chem.* **1957**, *22*, 482. Eine Übersicht über die Herstellung von Acylmetallocenen findet sich beispielsweise bei P.L. Pauson, *Methoden Org. Chem. (Houben-Weyl),* Bd. E18, Teil 1, S. 223-450. Einige Acylmetallocene sind auch kommerziell erhältlich.

Vorzugsweise werden als Acylmetallocene die Acylferrocene eingesetzt.

Vorzugsweise werden Acylmetallocene der Formel IIa oder IIb verwendet, die als Acylgruppen Acetylgruppen tragen, für die also gilt $R^1$ (= $R^{1'}$) = Methyl.

Die als Katalysator eingesetzten optisch aktiven Oxazaborolidine der Formel III sind aus EP-A 0 305 180 bekannt und können ausgehend von der natürlichen Aminosäure L-Prolin hergestellt werden, wobei die in Formel III

dargestellte (*S*)-Konfiguration erhalten wird. Entsprechend kann aus dem "unnatürlichen" D-Prolin die zu Formel III spiegelbildliche (*R*)-Konfiguration erhalten werden, bei deren Verwendung im erfindungsgemässen Verfahren entsprechend auch die Metallocenylalkanole der Formel IVa bzw. IVb und alle folgenden Stufen in der spiegelbildlichen Form erhalten werden.

Wenn als Oxazaborolidin (III) diejenige Verbindung eingesetzt wird, in welcher $R^6$ Wasserstoff ist, dann wird diese vorzugsweise *in situ* direkt aus dem optisch aktiven $\alpha,\alpha$-Diphenyl2-pyrrolidinmethanol und Boran hergestellt.

Das Boran wird vorzugsweise in Form eines stabilen Addukts, beispielsweise mit Dimethylsulfid, Tetrahydrofuran oder 1,4-Oxathian, eingesetzt. Besonders bevorzugt ist das Addukt mit Dimethylsulfid. Als Hydroborierungsmittel kann anstelle von Boran vorteilhaft auch ein Gemisch von $NaBH_4$ und $(CH_3)_3SiCl$ eingesetzt werden.

Zur weiteren Umsetzung in die Metallocenylphosphine der Formel I werden die Metallocenylalkanole der Formel IV zunächst zweckmässig verestert. Durch die Veresterung an der Hydroxygruppe wird eine Abgangsgruppe in das Molekül eingeführt, die im folgenden Syntheseschritt nucleophil substituiert werden kann. Als Abgangsgruppen eignen sich in diesem Fall nicht nur die sonst gebräuchlichen Gruppen wie beispielsweise Tosyl (*p*-Toluolsulfonyl) und verwandte Gruppen, sondern vorzugsweise auch Acetyl. Die Einführung der Acetylgruppen kann auf übliche Weise erreicht werden, zum Beispiel mit Essigsäureanhydrid in Gegenwart von Pyridin.

In der folgenden Stufe wird die Esterfunktion durch Umsetzung mit einem Amin nucleophil ausgetauscht, wobei aufgrund der besonderen Verhältnisse am Metallocensystem die Konfiguration des Chiralitätszentrums erhalten bleibt.

Als Amin wird ein Amin der allgemeinen Formel $HNR^2R^3$ (V) eingesetzt, wobei $R^2$ und $R^3$ die oben genannten Bedeutungen haben. Hierzu zählen insbesondere Ammoniak, Mono- und Dialkylamine mit $C_1$-$C_4$-Alkylgruppen, fünf- und sechsgliedrige gesättigte Stickstoffheterocyclen wie beispielsweise Pyrrolidin und Piperidin oder gesättigte Stickstoffheterocyclen, die noch weitere Heteroatome enthalten, wie beispielsweise Morpholin. Vorzugsweise wird als Amin ein sekundäres Amin eingesetzt, insbesondere Dimethylamin.

Das so erhaltene Metallocenylamin der allgemeinen Formel

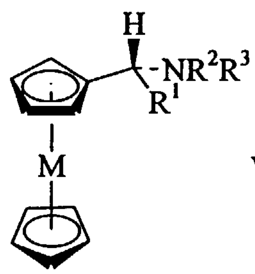
VIa

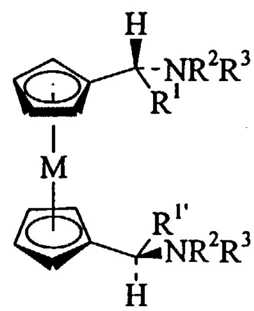
VIb

wird schliesslich in der letzten Stufe lithiiert und dann mit einem Halogenphosphin der allgemeinen Formel

$$X\,PR^4R^5 \qquad VII$$

worin X für Chlor, Brom oder Iod steht und $R^4$ und $R^5$ die oben genannten Bedeutungen haben, umgesetzt.

Vorzugsweise ist X Chlor, ebenfalls vorzugsweise sind $R^4$ und $R^5$ gleich und jeweils eine Phenylgruppe.

Die Lithiierung wird vorzugsweise mit n-Butyllithium in einem inerten Lösungsmittel durchgeführt.

Die folgenden Beispiele verdeutlichen die Durchführung des erfindungsgemässen Verfahrens, ohne dass darin eine Einschränkung zu sehen ist.

**Beispiel 1:**

**(*R*)-(1-Hydroxyethyl)ferrocen**

(Formel IVa, M = Fe, $R^1$ = Methyl)

In einem 10 l-Kolben wurde eine Lösung von 60,8 g (0,24 mol) (*S*)-$\alpha,\alpha$-Diphenylprolinol in 100 ml Tetrahydrofuran mit 30 ml Boran-Dimethylsulfid-Addukt unter Argon bei Raumtemperatur 38 h gerührt.

Anschliessend wurden 1,0 l Tetrahydrofuran und 750 g (3,29 mol) Acetylferrocen (bei 40 °C im Vakuum über

Nacht getrocknet) zu der so erhaltenen Katalysatorlösung gegeben und durch weiteren Zusatz von 1,0 l Tetrahydrofuran in Lösung gebracht. Die Katalysatormenge betrug somit 6,8 mol%. Innerhalb von 3 h wurden bei 20-25 °C weitere 145 ml Boran-Dimethylsulfid-Addukt (insgesamt 1,75 mol) gleichmässig zugetropft. Nach weiteren 30 min Rühren wurde das Reaktionsgemisch unter Kühlung durch Zugabe von 2,0 l Wasser hydrolysiert, wobei darauf geachtet wurde, dass die Temperatur nicht über 30 °C anstieg. Anschliessend wurden 2,0 l *tert*-Butylmethylether zugegeben, die Phasen getrennt und die wässrige Phase nochmals mit 1,0 l *tert*-Butylmethylether extrahiert. Die vereinigten organischen Phasen wurden über Magnesiumsulfat getrocknet und das Lösungsmittel abdestilliert.

Das so erhaltene rohe (*R*)-(1-Hydroxyethyl)ferrocen wurde ohne Reinigung für die nächste Stufe eingesetzt.

**Beispiel 2:**

**(*R*)-(1-Acetoxyethyl)ferrocen**

Zu dem rohen (*R*)-(1-Hydroxyethyl)ferrocen aus Beispiel 1 wurden bei 25 °C unter Argon 500g (6,32 mol) Pyridin und anschliessend 600 g (5,88 mol) Essigsäureanhydrid unter Rühren zugetropft. Das Reaktionsgemisch wurde noch 20 h bei 25 °C stehengelassen, dann mit 1,5 1 Ammoniumchloridlösung (20%) hydrolysiert und dreimal mit je 1,5 1 Ethylacetat extrahiert. Aus den vereinigten organischen Phasen wurde das Lösungsmittel abdestilliert. Ausbeute: 812 g (91%, bezogen auf Acetylferrocen)

Optische Reinheit: 88% ee (HPLC)

**Beispiel 3:**

**(*R*)-[1-(Dimethylamino)ethyl]ferrocen**

(Formel VIa, M = Fe, $R^1 = R^2 = R^3$ = Methyl)

In einem 10 l-Kolben wurden 812 g rohes (R)-1-Acetoxyethylferrocen aus Beispiel 2 unter Argon bei 25 °C unter Rühren mit 1,0 l 50%iger wässriger Dimethylaminlösung und 1,0 l Methanol versetzt, wobei die Temperatur auf 40 °C anstieg. Anschliessend wurde das Reaktionsgemisch 2 Tage bei 25 °C stehengelassen. Danach wurde das Gemisch bei 50 °C im Wasserstrahlvakuum bis auf 1,1 kg eingeengt und der Rückstand zu 2,0 l 20%iger Natronlauge gegeben.

Das so erhaltene Gemisch wurde dreimal mit je 1,0 l Dichlormethan extrahiert und die vereinigten organischen Phasen mit Magnesiumsulfat getrocknet. Nach Abdestillieren des Lösungsmittels wurde das rohe (*R*)-[1-(Dimethylamino)ethyl] ferrocen als dunkelbraunes Öl erhalten.

Ausbeute: 743 g (97%)

**Beispiel 4:**

***[S-(R*,S*)]*-1-[1-(Dimethylamino)ethyl]-2-(diphenylphosphino)ferrocen**

(Formel Ia, M = Fe, $R^1 = R^2 = R^3$ = Methyl, $R^4 = R^5$ = Phenyl)

In einem 10 l-Kolben wurden unter Argon 400 g (1,56 mol) (R)-[1-(Dimethylamino)ethyl]ferrocen aus Beispiel 3 in 3,5 l *tert*-Butylmethylether vorgelegt. Innerhalb von 1 h wurden bei 25 °C 1,22 l (3,10 mol) *n*-Butyllithium (2,55 M in Hexan) unter Rühren zugetropft. Zur Vervollständigung der Metallierung wurde noch 1 h nachgerührt, anschliessend wurden bei 20-45 °C innerhalb von 30 min 619 g (2,80 mol) Chlordiphenylphosphin zugetropft und das Gemisch schliesslich noch 2,5 h zum Rückfluss erhitzt.

Nach dem Abkühlen auf 15 °C wurde das Gemisch mit 1,8 l Natriumhydrogencarbonatlösung (80 g $NaHCO_3$) bei 20 °C hydrolysiert. Nach Zugabe von 0,4 l Dichlormethan wurde das Gemisch über Celite® filtriert. Der Filterrückstand wurde noch mit 1,0 l Dichlormethan nachgewaschen. Die organische Phase des Filtrats wurde abgetrennt und mit 0,4 l Wasser gewaschen. Die vereinigten wässrigen Phasen wurden mit insgesamt 4,0 l Dichlormethan dreimal extrahiert. Die vereinigten organischen Phasen wurden über Magnesiumsulfat getrocknet und bei Normaldruck auf *ca.* 1 l eingeengt. Zu dem braunen Rückstand wurden 1,5 l Ethanol gegeben und bei ca. 0 °C über Nacht gerührt. Das ausgefallene feste Produkt wurde abfiltriert, mit 0,5 l Methanol von 0 °C nachgewaschen und getrocknet.

Ausbeute: 325 g (47%), orange Kristalle (Ausbeute bezogen auf Acetylferrocen: 42%) Schmp.: 136,7-139,1°C

$[\alpha]_D^{20}$ = -368,8 (*c* = 0,6, Ethanol)

optische Reinheit: >98% ee.

**Beispiele 5 - 8:**

Analog zu Beispiel 1 wurden verschiedene Mengen des *in situ* aus (*S*)-α,α-Diphenylprolinol und Boran hergestellten Oxazaborolidins (III, $R^6$ = H) sowie der gemäss EP-A 0 305 180 hergestellten entsprechenden *B*-Methylverbindung (III, $R^6 = CH_3$) eingesetzt und die optische Reinheit des Produkts bestimmt.
Die erhaltenen Resultate waren folgende:

**Beispiel 5**: Katalysator: $R^6$ = H, eingesetzte Menge: 2,3 mol%, optische Reinheit: 54% ee.

**Beispiel 6**: Katalysator: $R^6$ = H, eingesetzte Menge: 4,5 mol%, optische Reinheit: 76% ee.

**Beispiel 7**: Katalysator: $R^6 = CH_3$, eingesetzte Menge: 4,5 mol%, optische Reinheit: 78% ee.

**Beispiel 8**: Katalysator: $R^6 = CH_3$, eingesetzte Menge: 7,3 mol%, optische Reinheit: 78% ee.

**Beispiel 9:**

**(*R*)-(1-Hydroxypropyl)ferrocen**

(Formel IVa, M = Fe, $R^1$ = Ethyl)
Zu einer Lösung von 10,0 g (41,3 mmol) Propionylferrocen und 2,5 ml (2,5 mmol, 0,06 eq) Katalysator (*S*)-III ($R^6 = CH_3$) in 30 ml Tetrahydrofuran wurde bei 20 °C 2,5 ml (25 mmol) Boran-Dimethylsulfid-Addukt innerhalb von 30 min getropft. Nach 1 h bei 20-25 °C wurde das Reaktionsgemisch unter starkem Rühren auf ca. 200 ml Eis/Wasser gegossen und 0,5 h gerührt. Die wässrige Phase wurde anschliessend dreimal mit je 200 ml tert-Butylmethylether extrahiert, die vereinigten organischen Phasen über Magnesiumsulfat getrocknet und im Hochvakuum eingeengt. Es wurden 10,7 g (106%) der rohen Titelverbindung erhalten. Dieses Rohprodukt kann ohne weitere Reinigung für die weiteren Reaktionen eingesetzt werden.
optische Reinheit: 96% ee (HPLC).

| | |
|---|---|
| $^1H$ NMR (400 MHz, $CDCl_3$): | $\delta$ = 4,27-4,21 (m, 2H),<br>4,21-4,12 (m, 3H),<br>4,17 (s, 5H),<br>1,96 (br. s, 1H),<br>1,75-1,60 (m, 2H),<br>0,94 (t, J= 7,4 Hz, 3H). |
| $^{13}C$ NMR (100 MHz, $CDCl_3$): | $\delta$= 94,32,<br>71,10,<br>68,26,<br>67,84,<br>67,69,<br>67,27,<br>65,22,<br>31,06,<br>10,37. |

**Beispiel 10:**

**(*R*)-[1-(Dimethylamino)propyl]ferrocen**

(Formel VIa, M = Fe, $R^1$ = Ethyl, $R^2 = R^3$ = Methyl)
Eine Lösung von 10,0 g (38,6 mmol) rohem (*R*)-(1-Hydroxypropyl)ferrocen in 10 ml Pyridin und 10 ml Essigsäureanhydrid wurde 18 h bei Raumtemperatur gerührt. Das Reaktionsgemisch wurde mit 50 ml Wasser versetzt und dreimal mit je 200 ml Diethylether extrahiert. Die vereinigten organischen Phasen wurden über Magnesiumsulfat getrocknet und einrotiert. Die Bildung des acetylierten (*R*)-(1-Hydroxypropyl)ferrocens kann $^1H$ NMR-spektroskopisch verfolgt werden ($\delta_{CHOAC}$ = 5,72-5,66, "dd", 1H). Das rohe (*R*)-(1-Acetoxypropyl)ferrocen wurde mit 100 ml Isopropylalkohol und 75 ml Dimethylamin (50% in Wasser) über Nacht bei Raumtemperatur gerührt. Anschließend wurde wässrig aufgearbeitet und dreimal mit je 200 ml Diethylether extrahiert. Die vereinigten organischen Phasen wurden über Magnesiumsulfat getrocknet und zur Trockne eingeengt.
Ausbeute: 9,10 g (87%) braunes Öl (Rohprodukt), welches langsam kristallisierte.

| | |
|---|---|
| $^1H$ NMR (400 MHz, $CDCl_3$): | $\delta$= 4,20-4,08 (m, 2H), |
| | 4,10 (s, 5H), |
| | 4,08-4,06 (m, 1H), |
| | 4,02-4,01 (m, 1H), |
| | 3,27-3,23 ("dd", 1H), |
| | 2,10-1,96 (m, 1H), |
| | 2,00 (s, 6H), |
| | 1,79-1,67 (m, 1H), |
| | 1,10 (t, *J*= 7,5 Hz,3H). |

**Beispiel 11:**

**[*S*(*R**,*S**)]-1-[1-(Dimethylamino)propyl]-2-(diphenylphosphino)ferrocen**

(Formel Ia, M = Fe, $R^1$ = Ethyl, $R^2$ = $R^3$ = Methyl, $R^4$ = $R^5$ = Phenyl)

Zu einer Lösung von 9,53 g (35 mmol) (*R*)-[1-(Dimethylamino)propyl]ferrocen in 60 ml *tert*-Butylmethylether wurden bei Raumtemperatur innerhalb von 0,5 h 32,5 ml (188 mmol) *n*-Butyllithium (2,7 M in Hexan) zugetropft und 1 h nachgerührt. Anschließend wurde noch 30 min unter Rückfluss erhitzt, bis keine Gasentwicklung mehr zu beobachten war. Bei 25-35 °C wurden 13,0 ml (70 mmol) *P*-Chlordiphenylphosphin zugetropft und das Gemisch anschliessend 4 h am Rückfluss erhitzt. Nach weiteren 16 h bei Raumtemperatur wurde das Reaktionsgemisch auf 200 ml Eis/Wasser gegossen und 0,5 h gerührt. Dreimalige Extraktion mit je 150 ml Diethylether ergab nach dem Einengen der vereinigten organischen Phasen am Rotationsverdampfer 24,4 g Rückstand, der aus Ethanol umkristallisiert wurde.
Ausbeute: 6,03 g (38%) orange Kristalle
Schmp.: 139,5-140,5 °C
$[\alpha]_D^{25}$ = -384,3 (*c* = 1, $CHCl_3$)

| | |
|---|---|
| $^1H$ NMR (400 MHz, $CDCl_3$): | $\delta$= 7,63-7,56 (m, 2H), |
| | 7,36-7,32 (m, 3H), |
| | 7,25-7,14 (m, 5H), |
| | 4,32-4,29, (m, 1H), |
| | 4,27-4,24 (m, 1H), |
| | 3,92-3,88 (m, 1H), |
| | 3,90 (s, 5H), |
| | 3,88-3,83 (m, 1H), |
| | 1,88-1,75 (m, 2H), |
| | 1,78(s,6H), |
| | 1,18(t, *J*=7,4Hz,3H). |

| | |
|---|---|
| $^{13}C$ NMR (100 MHz, $CDCl_3$): | $\delta$= 140,99 ($J_{PC}$ = 13 Hz), |
| | 139,33 ($J_{PC}$ = 12 Hz), |
| | 135,30 ($J_{PC}$ = 21 Hz), |
| | 132,36 ($J_{PC}$ = 19 Hz), |
| | 128,67, |
| | 127,86 ($J_{PC}$ = 7 Hz), |
| | 127,37 ($J_{PC}$ = 6 Hz), |
| | 127,16, |
| | 96,86 ($J_{PC}$ = 23 Hz), |
| | 76,24 ($J_{PC}$ = 8 Hz), |
| | 71,45 ($J_{PC}$ = 6 Hz), |
| | 69,72, |
| | 69,63, |
| | 68,27, |
| | 63,33 ($J_{PC}$ = 6 Hz), |
| | 39,64, |
| | 22,05, |

13,52.

**Beispiel 12:**

**(*R,R*)-1,1'-Bis(1-hydroxyethyl)ferrocen**

(Formel IVb, M = Fe, $R^1 = R^{1'}$ = Methyl)

Zu einer Lösung von 30,0 g (111 mmol) 1,1'-Diacetylferrocen und 13,5 ml (13,5 mmol, 0,12 eq) Katalysator (*S*)-III ($R^6 = CH_3$) in 200 ml Tetrahydrofuran wurden bei 20 °C innerhalb von 45 min 11,5 ml (115 mmol) Boran-Dimethylsulfid-Addukt getropft. Nach 1 h bei 20-25 °C wurde das Reaktionsgemisch unter starkem Rühren auf *ca.* 600 ml Eis/Wasser gegossen und 0,5 h gerührt. Die wässrige Phase wurde anschliessend dreimal mit je 200 ml *tert*-Butylmethylether extrahiert, die vereinigten organischen Phasen über Magnesiumsulfat getrocknet und im Hochvakuum eingeengt. Es wurden 32,7 g (107%) der rohen Titelverbindung erhalten. Dieses Rohprodukt kann ohne weitere Reinigung für die weiteren Reaktionen eingesetzt werden. Umkristallisation aus Hexan lieferte (*R,R*)-1,1'-Bis(1-hydroxyethyl)ferrocen als gelben kristallinen Feststoff.
optische Reinheit: >99% ee (HPLC).

Analog kann aus 1,1'-Diacetylferrocen und (*R*)-III ($R^6 = CH_3$ DAS (*S,S*)-1,1'-bis(1-hydroxyethyl)ferrocen erhalten werden.
Schmp.: 71,8-72,5 °C

| | |
|---|---|
| $^1$H NMR (400 MHz, $CDCl_3$): | δ= 4,65 (q, *J*= 6,3 Hz, 2H),<br>4,22-4,10 (m, 10H),<br>1,39 (d, *J* = 6,3 Hz, 6H). |
| $^{13}$C NMR (100 MHz, $CDCl_3$): | δ= 95,27,<br>67,71,<br>67,62,<br>66,17,<br>66,05,<br>65,64,<br>25,54. |

**Beispiel 13:**

**(*S,*S)-1,1'-Bis(1-acetoxyethyl)ferrocen**

Zu 4,00 g (14,6 mmol) (*S,S*)-1,1'-Bis(1-hydroxyethyl)ferrocen wurden 4,0 ml Pyridin und 4,0 ml Essigsäureanhydrid gegeben und die entstandene Lösung über Nacht bei 25 °C gerührt. Nach der Hydrolyse des überschüssigen Anhydrids mit 100 ml Wasser wurde zweimal mit je 200 ml Diethylether extrahiert und die vereinigten organischen Extrakte über Magnesiumsulfat getrocknet. Das Lösungsmittel wurde abgezogen und der Rückstand am Hochvakuum bis zur Gewichtskonstanz getrocknet.
Ausbeute: 4,83 g (92%) dunkelbraunes Öl (Rohprodukt), welches langsam kristallisierte.

| | |
|---|---|
| $^1$H NMR (400 MHz, $CDCl_3$): | δ= 5,82 (q, *J*= 6,8 Hz, 2H),<br>4,24 (m, 2H),<br>4,18 (m, 2H),<br>4,13 (m, 4H),<br>2,05 (s, 6 ),<br>1,54 (d, *J* = 6,8 Hz, 6H). |
| $^{13}$C NMR (100 MHz, $CDCl_3$): | δ= 170,46,<br>88,85,<br>69,23,<br>68,94,<br>68,87,<br>68,64,<br>66,69,<br>21,37, |

20,34.

**Beispiel 14:**

**(*R,R*)-1,1'-Bis[1-(dimethylamino)ethyl]ferrocen**

(Formel VIb, M = Fe, $R^1 = R^{1'} = R^2 = R^3$ = Methyl)

32,7 g *(ca.* 111 mmol) rohes (*R,R*)-1,1'-Bis(l-hydroxyethyl)ferrocen wurden in 30 ml Pyridin gelöst und mit 30 ml Essigsäureanhydrid versetzt. Nach 16 h Rühren bei 25 °C wurde das überschüssige Anhydrid mit 200 ml Eiswasser hydrolysiert und das Gemisch dreimal mit je 100 ml Diethylether extrahiert. Die vereinigten organischen Phasen wurden nochmals mit *ca.* 150 ml Wasser gewaschen, über Magnesiumsulfat getrocknet und eingeengt. Der Rückstand wurde mit 200 ml Hexan versetzt und am Rotationsverdampfer (<40 °C) das Lösungsmittel entfernt. Dieser Vorgang wurde noch zweimal wiederholt. Das so erhaltene dunkelbraune Öl wurde in 200 ml Isopropylalkohol gelöst und mit 120 ml Dimethylamin (50% in Wasser) versetzt. Nach dem Rühren (16 h) bei 25 °C wurde 200 ml Wasser zugegeben und das Reaktionsgemisch mit 100 ml 32% HCl aufpH 1 gestellt und die wässrige Phase zweimal mit je 100 ml Diethylether gewaschen. Die Wasserphase wurde mit Natronlauge (40%) basisch gestellt (pH 12-14) und dreimal mit je 100 ml Diethylether extrahiert. Die vereinigten organischen Phasen wurden über Magnesiumsulfat getrocknet und eingeengt. Um den noch vorhandenen Isopropylalkohol zu entfernen wurde das erhaltene Öl mit *ca.* 100 ml Hexan versetzt und nochmals am Rotationsverdampfer eingeengt. Dieser Vorgang wurde noch zweimal wiederholt. Nach dem Trocknen am Hochvakuum wurden 24,1 g (66%, bezogen auf 1,1'-Diacetylferrocen) der Titelverbindung in Form eines dunkelbraunen Öls erhalten. (Ohne Salzsäure-Behandlung steigt die Ausbeute auf 86%.)

$^1$H NMR (400 MHz, $CDCl_3$): δ= 4,11-4,01 (m, 8H),
3,60 (q, *J*= 6,9 Hz, 2H),
2,08 (s, 12H),
1,44 (s, 6H).

**Beispiel 15:**

**2,2'-Bis[(*R*)-1-(dimethylamino)ethyl]-(*S,S*)-1,1'-bis-(diphenylphosphino)ferrocen**

(Formel Ib, M = Fe, $R^1 = R^{1'} = R^2 = R^3$ = Methyl, $R^4 = R^5$ = Phenyl)

20,0 g (60,9 mmol) (*R,R*)-1,1'-Bis[1-(dimethylamino)ethyl]ferrocen wurden in 200 ml *tert*-Butylmethylether gelöst und mit 67,7 ml (183 mmol) n-Butyllithium (2,7 M in Hexan) versetzt und 2,5 h bei Raumtemperatur gerührt. Anschliessend wurde 40,6 ml (213 mmol) *P*-Chlordiphenylphosphin unter Rückfluss während % h langsam zugetropft und 2 h unter Rückfluss erhitzt. Nach dem Erkalten auf 20 °C wurde das Reaktionsgemisch auf *ca.* 600 ml gesättigte Natriumhydrogencarbonatlösung gegossen und zweimal mit je 400 ml Toluol extrahiert. Die vereinigten organischen Phasen wurden über Magnesiumsulfat getrocknet und teilweise eingeengt. Die rotbraune Lösung wurde bei 1 h bei 80 °C mit 6 g Aktivkohle erhitzt, anschliessend filtriert und zur Trockne eingeengt. Der Rückstand wurde mit 300 ml Methanol aufgenommen und filtriert. Nach dem Trocknen wurden 29,4 g (69%) der Titelverbindung als hellgelbes Pulver isoliert.

$^1$H NMR (400 MHz, $CDCl_3$): δ= 7,78-7,08 (m, 20H),
4,33 (m, 2H),
4,14 (m, 2H),
4,06 ("dq", 2H),
3,05 (m, 2H),
1,71 (s, 12H),
1,26 (q, *J*= 7 Hz, 6H).

**Patentansprüche**

1. Verfahren zur Herstellung optisch aktiver Metallocenylphosphine der allgemeinen Formeln

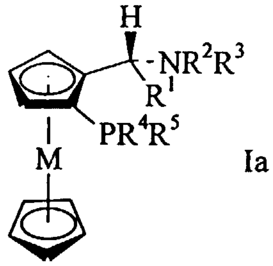

Ia

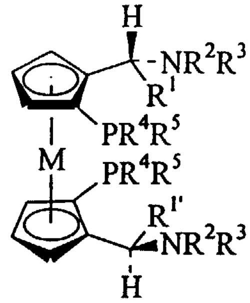

Ib

und deren Spiegelbilder,

worin M Eisen, Ruthenium oder Nickel
und $R^1$ und $R^{1'}$ unabhängig voneinander eine $C_1$-$C_4$-Alkylgruppe, eine $C_1$-$C_4$-Perfluoralkylgruppe, eine $C_2$-$C_4$-Alkenylgruppe, eine $C_3$-$C_6$-Cycloalkylgruppe oder eine gegebenenfalls substituierte Arylgruppe bedeuten, $R^2$ und $R^3$ entweder unabhängig voneinander jeweils Wasserstoff oder eine $C_1$-$C_4$-Alkylgruppe sind oder $R^2$ und $R^3$ zusammen mit dem Stickstoffatom einen gegebenenfalls weitere Heteroatome enthaltenden fünf- oder sechsgliedrigen gesättigten heterocyclischen Ring bilden
und $R^4$ und $R^5$ jeweils unabhängig voneinander eine $C_1$-$C_4$-Alkylgruppe, eine $C_3$-$C_6$-Cycloalkylgruppe oder eine gegebenenfalls mit einer oder mehreren Methyloder Methoxygruppen oder mit einem oder mehreren Fluoratomen substituierte Arylgruppe bedeuten oder $R^4$ und $R^5$ zusammen mit dem Phosphoratom einen fünf- oder sechsgliedrigen gesättigten heterocyclischen Ring bilden, dadurch gekennzeichnet, dass in einer ersten Stufe ein Acylmetallocen der allgemeinen Formeln

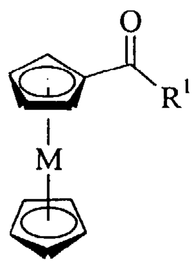

IIa

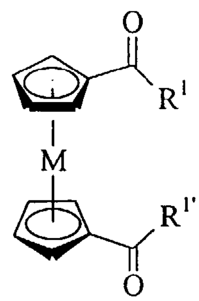

IIb

in der M, $R^1$ und $R^{1'}$ die oben genannte Bedeutung haben, mit Boran oder einem anderen Hydroborierungsmittel in Gegenwart eines optisch aktiven Oxazaborolidins der Formel

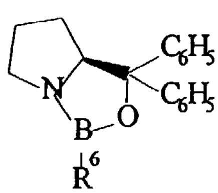

III

oder deren Spiegelbild,
worin $R^6$ Wasserstoff, $C_1$-$C_4$-Alkyl oder Phenyl ist,
zu dem entsprechenden Metallocenylalkanol der allgemeinen Formeln

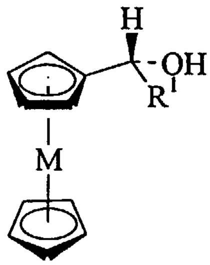

IVa

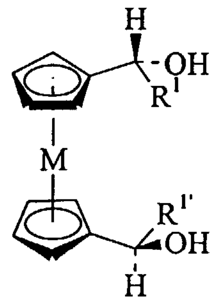

IVb

oder deren Spiegelbild,
worin $R^1$ und $R^{1'}$ die oben genannten Bedeutungen haben, enantioselektiv reduziert, anschliessend, nach Veresterung der Hydroxygruppe, mit einem sekundären Amin der allgemeinen Formel $HNR^2R^3$ (V), wobei $R^2$ und $R^3$ die oben genannten Bedeutungen haben, zum entsprechenden Metallocenylamin der allgemeinen Formeln

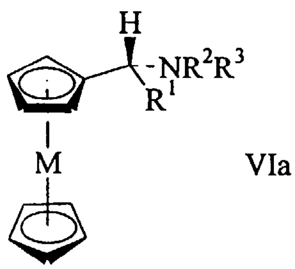

VIa

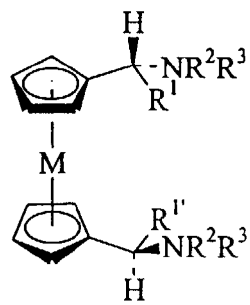

VIb

oder deren Spiegelbild,
worin M und $R^1$ bis $R^3$ die oben genannten Bedeutungen haben, umgesetzt und schliesslich durch Lithiierung und anschliessende Reaktion mit einem Halogenphosphin der allgemeinen Formel

$$X\ PR^4R^5 \qquad \text{VII}$$

worin $R^4$ und $R^5$ die oben genannten Bedeutungen haben, und X Chlor, Brom oder Iod ist, in die Zielverbindung übergeführt wird.

**2.** Verfahren nach Anspruch 1, dadurch gekennzeichnet, dass als Acylmetallocen (II) ein Acylferrocen eingesetzt wird.

**3.** Verfahren nach Anspruch 1 oder 2, dadurch gekennzeichnet, dass als Acylmetallocen (II) ein Acetylmetallocen eingesetzt wird.

**4.** Verfahren nach einem oder mehreren der Ansprüche 1 bis 3, dadurch gekennzeichnet, dass das Oxazaborolidin (III), worin $R^6$ Wasserstoff ist, *in situ* aus dem entsprechenden optisch aktiven $\alpha,\alpha$-Diphenyl-2-pyrrolidinmethanol und Boran hergestellt wird.

**5.** Verfahren nach einem oder mehreren der Ansprüche 1 bis 4, dadurch gekennzeichnet, dass Boran in Form seines Addukts mit Dimethylsulfid eingesetzt wird.

**6.** Verfahren nach einem oder mehreren der Ansprüche 1 bis 5, dadurch gekennzeichnet, dass die Hydroxygruppe des Metallocenylalkanols (IVa/IVb) vor der Umsetzung mit dem sekundären Amin (V) acetyliert wird.

**7.** Verfahren nach einem oder mehreren der Ansprüche 1 bis 6, dadurch gekennzeichnet, dass als sekundäres Amin

(V) Dimethylamin eingesetzt wird.

**8.** Verfahren nach einem oder mehreren der Ansprüche 1 bis 7, dadurch gekennzeichnet, dass als Halogenphosphin Chlordiphenylphosphin eingesetzt wird.

**9.** Verfahren zur Herstellung optisch aktiver Metallocenyldialkanole der allgemeinen Formel

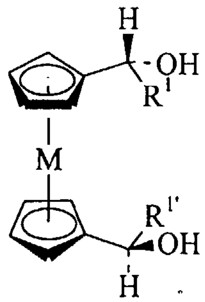

IVb

oder deren Spiegelbild,

worin M, $R^1$ und $R^{1'}$ die in Anspruch 1 genannte Bedeutung haben, dadurch gekennzeichnet, dass ein Diacylmetallocen der allgemeinen Formel

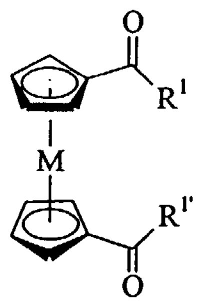

IIb

worin M, $R^1$ und $R^{1'}$ die oben genannten Bedeutungen haben, mit Boran oder einem anderen Hydroborierungsmittel in Gegenwart eines optisch aktiven Oxazaborolidins der Formel

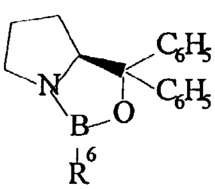

III

oder deren Spiegelbild,
worin $R^6$ Wasserstoff, $C_1$-$C_4$-Alkyl oder Phenyl ist, enantioselektiv reduziert wird.

**10.** Verfahren nach Anspruch 9, dadurch gekennzeichnet, dass als Diacylmetallocen (IIb) ein Diacylferrocen eingesetzt wird.

**11.** Verfahren nach Anspruch 9 oder 10, dadurch gekennzeichnet, dass als Diacylmetallocen (IIb) ein Diacetylmetallocen eingesetzt wird.

**12.** Verfahren nach einem oder mehreren der Ansprüche 9 bis 11, dadurch gekennzeichnet, dass das Oxazaborolidin (III), worin $R^6$ Wasserstoff ist, *in situ* aus dem entsprechender optisch aktiven α,α-Diphenyl-2-pyrrolidinmethanol und Boran hergestellt wird.

**13.** Verfahren nach einem oder mehreren der Ansprüche 9 bis 12, dadurch gekennzeichnet, dass Boran in Form eines Addukts mit Dimethylsulfid eingesetzt wird.

**Claims**

**1.** A process for preparing optically active metallocenyl phosphines of the general formula

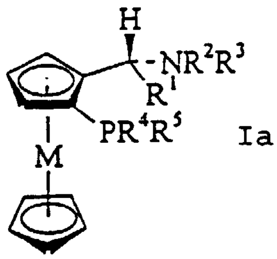
Ia or
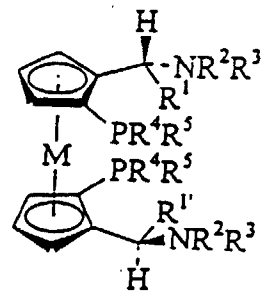
Ib

and the mirror image thereof,

in which M represents iron, ruthenium or nickel
and $R^1$ and $R^{1'}$, independently, represent a $C_1$-$C_4$-alkyl group, a $C_1$-$C_4$-perfluoroalkyl group, a $C_2$-$C_4$-alkenyl group, a $C_3$-$C_6$-cycloalkyl group or an optionally substituted aryl group,
either $R^2$ and $R^3$, independently, each represent hydrogen or a $C_1$-$C_4$-alkyl group or $R^2$ and $R^3$, together with the nitrogen atom, form a five or six-membered saturated heterocyclic ring which optionally contains further heteroatoms
and $R^4$ and $R^5$, independently, each represent a $C_1$-$C_4$-alkyl group, a $C_3$-$C_6$-cycloalkyl group or an aryl group optionally substituted with one or more methyl or methoxy groups or with one or more fluorine atoms or $R^4$ and $R^5$, together with the phosphorus atom, form a five or six-membered saturated heterocyclic ring,

characterised in that, in a first step, an acylmetallocene of the general formula

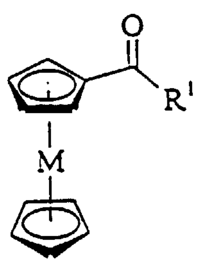
IIa or
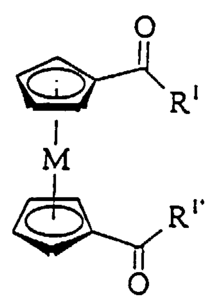
IIb

in which M, $R^1$ and $R^{1'}$ are defined as above, is enatioselectively reduced with borane or another hydroboration agent in the presence of an optically active oxazaborolidine of the formula

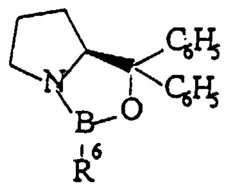

III

or the mirror image thereof,
in which $R^6$ represents hydrogen or a $C_1$-$C_4$-alkyl group or phenyl,
to give the corresponding metallocenyl alkanol of the general formula

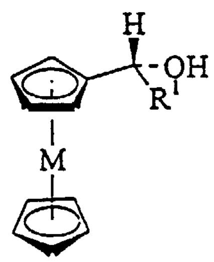

IVa or

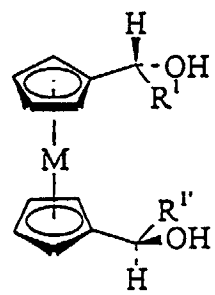

IVb

or the mirror image thereof,
in which $R^1$ and $R^{1'}$ are defined as above, then, after esterification of the hydroxyl group, is reacted with a secondary amine of the general formula $HNR^2R^3$ (V),
wherein $R^2$ and $R^3$ are defined as above, to give the corresponding metallocenyl amine of the general formulae

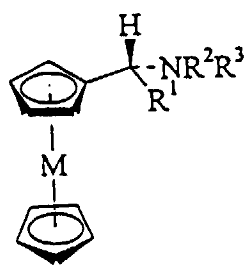

VIa or

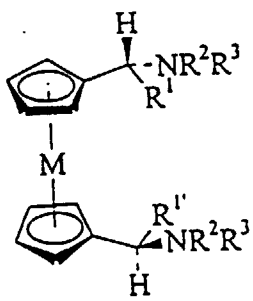

VIb

or the mirror image thereof,
in which M and $R^1$ to $R^3$ are defined as above, and is finally converted into the target compound by treating with lithium followed by reaction with a halogenophosphine of the general formula

$$X PR^4R^5$$

in which $R^4$ and $R^5$ are defined as above and X represents chlorine, bromine or iodine.

**2.** A process according to Claim 1, characterised in that an acylferrocene is used as acylmetallocene (II).

**3.** A process according to Claim 1 or 2, characterised in that an acetylmetallocene is used as acylmetallocene (II).

**4.** A process according to one or more of Claims 1 to 3, characterised in that the oxazaborolidine (III), in which $R^6$ is hydrogen, is prepared in *situ* from the corresponding optically active a,a-diphenyl-2-pyrrolidinemethanol and borane.

**5.** A process according to one or more of Claims 1 to 4, characterised in that borane is used in the form of its adduct with dimethyl sulfide.

**6.** A process according to one or more of Claims 1 to 5, characterised in that the hydroxy group in the metallocenyl alkanol (IVa/IVb) is acetylated before reaction with the secondary amine (V).

**7.** A process according to one or more of Claims 1 to 6, characterised in that dimethylamine is used as secondary amine (V).

**8.** A process according to one or more of Claims 1 to 7, characterised in that chlorodiphenylphosphine is used as the halogenophosphine.

**9.** A process for preparing optically active metallocenyl dialkanols of the general formula

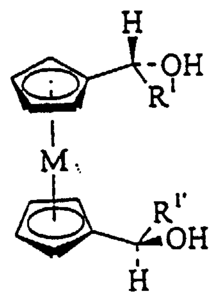

IVb

or the mirror image thereof,
in which M, $R^1$ and $R^{1'}$ are defined in the same way as in Claim 1, characterised in that a diacylmetallocene of the general formula

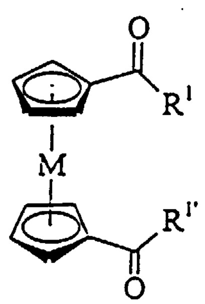

IIb

in which M, $R^1$ and $R^{1'}$ are defined in the same way as given above, is enatioselectively reduced with borane or another hydroboration agent in the presence of an optically active oxazaborolidine of the formula

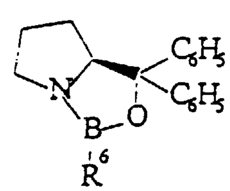

III

or the mirror image thereof, in which $R^6$ represents hydrogen, a $C_1$-$C_4$-alkyl group or phenyl.

**10.** A process according to Claim 9, characterised in that a diacylferrocene is used as diacylmetallocene (IIb).

**11.** A process according to Claim 9 or 10, characterised in that a diacetylmetallocene is used as diacylmetallocene (IIb) .

**12.** A process according to one or more of Claims 9 to 11, characterised in that the oxazaborolidine (III), in which $R^6$ is hydrogen, is prepared *in situ* from the corresponding optically active a,a-diphenyl-2-pyrrolidinemethanol and borane.

**13.** A process according to one or more of Claims 9 to 12, characterised in that borane is used in the form of its adduct with dimethyl sulfide.

**Revendications**

**1.** Procédé pour la préparation de phosphine de métallocényle optiquement actives des formules générales

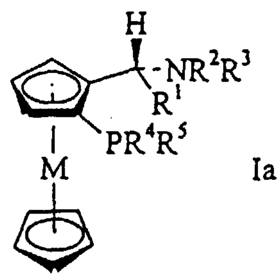
Ia

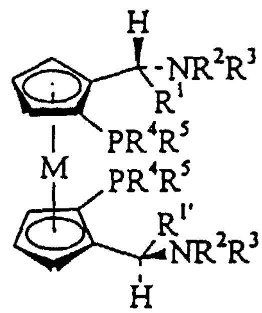
Ib

et de leurs images spéculaires

dans lesquelles M signifie le fer, le ruthénium ou le nickel et $R^1$ et $R^{1'}$ signifient indépendamment l'un de l'autre un groupe alkyle $C_1$-$C_4$, un groupe perfluoroalkyle $C_1$-$C_4$, un groupe alcényle $C_2$-$C_4$, un groupe cycloalkyle $C_3$-$C_6$ ou un groupe aryle éventuellement substitué,
$R^2$ et $R^3$ sont indépendamment l'un de l'autre, respectivement l'hydrogène ou un groupe alkyle $C_1$-$C_4$ ou $R^2$ et $R^3$ conjointement avec l'atome d'azote forment éventuellement un cycle hétérocyclique saturé à cinq ou six éléments contenant éventuellement d'autre hétéroatomes
et $R^4$ et $R^5$ indépendamment l'un de l'autre signifient respectivement un groupe alkyle $C_1$-$C_4$, un groupe cycloalkyle $C_3$-$C_6$ ou un groupe aryle éventuellement substitué par un ou plusieurs groupes méthyle ou méthoxy ou par un ou plusieurs atomes de fluor ou $R^4$ et $R^5$ conjointement avec l'atome de phosphore forment un cycle hétérocyclique saturé à cinq ou six éléments, caractérisé en ce que dans une première étape on transforme en le composé cible un acylmétallocène des formules générales

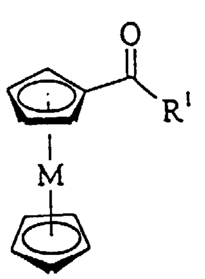
IIa

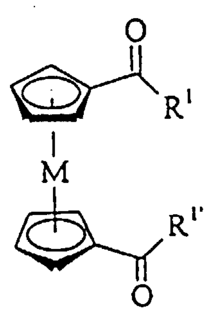
IIb

dans lesquelles M, $R^1$ et $R^{1'}$ ont la signification ci-dessus, avec du borane ou un autre agent d'hydroboruration en présence d'une oxazaborolidine active optiquement de la formule

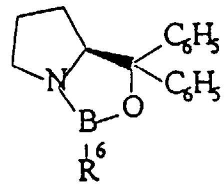

III

ou de son image spéculaire

dans laquelle $R^6$ est l'hydrogène, l'alkyle $C_1$-$C_4$ ou phényle, en ce que l'on réduit de façon énantiosélective en le métallocénylalcanol correspondant des formules générales

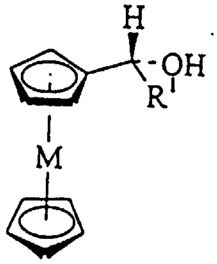

IVa

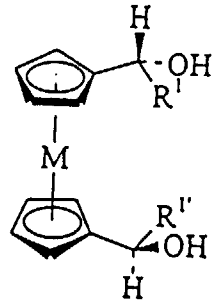

IVb ·

ou de leurs image spéculaire

dans lesquelles $R^1$ et $R^{1'}$ ont les significations précitées et ensuite après estérification du groupe hydroxy avec une amine secondaire de la formule générale $HNR^2R^3$(V), $R^2$ et $R^3$ ayant les significations ci-dessus, en ce que l'on transforme en la métallocénylamine correspondant des formules générales

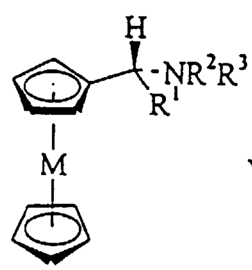

VIa

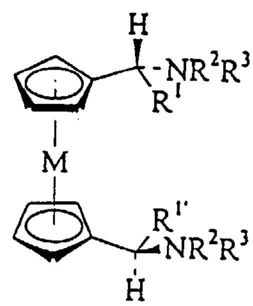

VIb

ou de leur image spéculaire

dans laquelle M et $R^1$ jusqu'à $R^3$ ont les significations précitées et finalement par lithiation et réaction consécutive avec une halogénophosphine de la formule générale

**X PR R** Formule VII

dans laquelle

$R^4$ et $R^5$ ont les significations précitées et X signifie le chlore, le brome ou l'iode.

**2.** Procédé selon la revendication 1, caractérisé en ce qu'en tant qu'acyle métallocène (II) on utilise un acyle ferrocène.

**3.** Procédé selon la revendication 1 ou 2, caractérisé en ce qu'en tant qu'acyle métallocène (II) on utilise un acyle métallocène.

**4.** Procédé selon une ou plusieurs des revendications 1 à 3, caractérisé en ce que l'oxazaborolidine (III) dans laquelle $R^6$ est l'hydrogène, est préparée in situ à partir de l'$\alpha,\alpha$-diphényl-2-pyrrolidinméthanol et du borane actif optiquement.

**5.** Procédé selon une ou plusieurs des revendications 1 à 4, caractérisé en ce que le borane est mis en oeuvre sous forme de son produit d'addition avec le diméthylesulfide.

**6.** Procédé selon une ou plusieurs des revendications 1 à 5 caractérisé en ce que le groupe hydroxy du métallocénylalcanol est acétylé avant la réaction avec l'amine secondaire (V).

**7.** Procédé selon une ou plusieurs des revendications 1 à 6, caractérisé en ce qu'en tant qu'amine secondaire (V), on utilise la diméthylamine.

**8.** Procédé selon une ou plusieurs des revendications 1 à 7 caractérisé en ce qu'en tant que halogénophosphine on utilise la chlorodiphénylphosphine.

**9.** Procédé pour la préparation de métallocényle dialcanols actifs optiquement de la formule générale

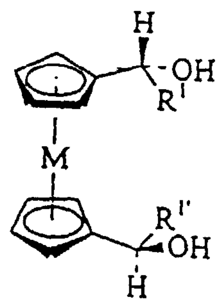

IVb

ou de son image speculaire

dans laquelle M $R^1$ et $R^{1'}$ ont la signification citée dans la revendication 1, caractérisé en ce que l'on réduit de façon énantioélective un diacylmétallocène de la formule générale

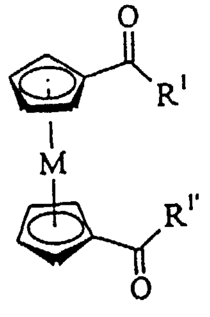

IIb

dans laquelle M, $R^1$ et $R^{1'}$ ont les significations précitées, avec un borane ou un autre agent d'hydroboruration en présence d'une oxazaborolidine active optiquement de la formule

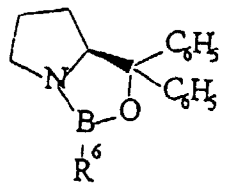

III

ou de son image speculaire
dans laquelle $R^6$ est l'hydrogène, l'alkyle $C_1$-$C_4$ ou phényle.

**10.** Procédé selon la revendication 9, caractérisé en ce qu'en tant que diacylmétallocène (IIb), on utilise un diacyleferrocène.

**11.** Procédé selon la revendication 9 et ou 10, caractérisé en ce qu'en tant que diacyle métallocène (IIb), on utilise un diacétylemétallocène.

**12.** Procédé selon une ou plusieurs des revendications 9 à 11 caractérisé en ce que l'oxazaborolidine (III) ou $R^6$ est l'hydrogène, est préparée in situ à partir de $\alpha,\alpha$-diphényl-2-pyrrolidinméthanol correspondant actif optiquement et du borane.

**13.** Procédé selon une ou plusieurs des revendications 9 à 12 caractérisé en ce que le borane est mis en oeuvre sous forme d'un produit d'addition avec du diméthylesulfide.